(19) Europäisches Patentamt
European Patent Office
Office européen des brevets

(11) **EP 4 704 046 A1**

(12) **EUROPEAN PATENT APPLICATION**

(43) Date of publication:
**04.03.2026 Bulletin 2026/10**

(51) International Patent Classification (IPC):
***G06V 10/98*** *(2022.01)* ***G06V 20/40*** *(2022.01)*

(21) Application number: **24197331.2**

(22) Date of filing: **29.08.2024**

(52) Cooperative Patent Classification (CPC):
**G06V 10/98; G06F 16/55; G06F 16/583;
G06F 16/75; G06F 16/78; G06V 20/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Koninklijke Philips N.V.
5656 AG Eindhoven (NL)**

(72) Inventors:
• **MANNE, Shanmukh Reddy
Eindhoven (NL)**

• **MAITY, Reevu
Eindhoven (NL)**
• **KULKARNI, Venkatesh
Eindhoven (NL)**
• **BERNTSEN, Luc
Eindhoven (NL)**
• **KOCKX, Franciscus Nicolaas
Eindhoven (NL)**
• **BUSSA, Nagaraju
Eindhoven (NL)**

(74) Representative: **Philips Intellectual Property &
Standards
High Tech Campus 52
5656 AG Eindhoven (NL)**

(54) **PROCESSING INSTANCES OF IMAGE DATA**

(57)    A mechanism for predicting errors in detection information produced by a detection algorithm processing an instance of image data. Detection information from one or more first instances of image data and a second instance of image data is processed to produce characterizing data for each instance of image data. The first and second instances of image data form a portion of a sequence of instances of image data. The characterizing data is processed to generate an indicator of predicted accuracy of the detection information in the second instance of image data.

FIG. 2

**Description**

FIELD OF THE INVENTION

The present invention relates to the field of image data processing, and in particular to keypoint or object detection in image data processing.

BACKGROUND OF THE INVENTION

There is an increasing interest in the automated processing of image data, particularly to perform tasks of keypoint and/or object detection. In such tasks, image data is processed using one or more algorithms to identify any part of the image data that represent one or more keypoints and/or objects in the image data.

By way of example, in the field of medical image data analysis, it would be advantageous to perform accurate and automated identification of the representation of one or more keypoints (also known as landmarks) and/or anatomical objects (e.g., anatomical organs or portions of an anatomical organ) within the medical image data.

As another example, in the field of baby monitoring, it would be advantageous to perform accurate and automated identification of the representation of one or more keypoints (e.g., the location of particular facial features) and/or portions (e.g., the face and/or torso) of a baby represented in image data.

However, it is appreciated that automated processes for performing keypoint and/or object detection are not infallible, and that there may be inaccuracies in the identification part(s) of image data that represent keypoints and/or objects.

There is therefore a desire to provide a mechanism that is able to predict whether or not an identified part of image data (predicted to represent a particular keypoint and/or object) is accurate. In other words, there is a desire to provide a self-validating keypoint/object detection algorithm and/or system.

SUMMARY OF THE INVENTION

The invention is defined by the claims.

According to examples in accordance with an aspect of the invention, there is provided computer-implemented method for processing a temporal sequence of instances of image data, wherein the temporal sequence of instances of image data comprises one or more first instances of image data and a second instance of image data, wherein the second instance of image data is later in the sequence than each first instance of image data.

The computer-implemented method comprises: for each first instance of image data and the second instance of image data: using a detection algorithm to process the instance of image data and produce detection information that identifies, if present, a part of the instance of image data predicted to represent at least one selected from the group of: at least one predetermined keypoint in the imaged region; and at least one predetermined object in the imaged region; and processing the detection information to produce characterizing data that characterizes one or more properties of, if identified, the part of the instance of image data.

The computer-implemented method also comprises processing the characterizing data of each first instance of image data and the second instance of image data to generate an indicator that indicates an accuracy of the detection information for the second instance of image data.

The present disclosure therefore provides a mechanism for identifying an accuracy of an output of a detection algorithm that processes a (second) instance of image data. The proposed approach exploits the recognition that, in a sequence of instances of image data, it is expected that there will be a temporal interdependency between detection information produced by the detection algorithm for earlier (in the sequence) instances of image data and detection information produced by the detection algorithm for later (in the sequence) instances of image data. This interdependency is exploited to predict an accuracy of a second instance of image data later in the sequence to a group of one or more first instances of image data.

In other words, the proposed approach recognizes and exploits the inherent temporal relationships between images in a sequence to identify potential errors in a detection algorithm. The disclosed method recognizes that there is typically a strong correlation between the content of consecutive frames or images in such sequences. By predicting an accuracy of the detection algorithm, the proposed approach allows downstream processes or human operators to make more informed decisions based on the detection results and/or correction of the erroneous detection information.

For the avoidance of doubt, it is noted that a part of an instance of image data comprises only part of the instance of image data (i.e., not the entirety of the instance of image data). For instance, the part of an instance of image data may be conceptually represented by a bounding box that is predicted to enclose a representation (in the instance of image data) of the one or more keypoints and/or objects of the imaged region.

The temporal sequence of first data portions preferably comprises more than one first instance of image data, e.g., more than two first instances of image data, e.g., more than five first instances of image data. Increasing numbers of first instances of image data improves the prediction or detection of erroneous or inaccurate detection information for the second instance of image data.

In some examples, for each first instance of image data and the second instance of image data, the characterizing data comprises a location of the part of the instance of image data.

In some examples, for each first instance of image data and the second instance of image data, the step of processing the characterizing data of each first instance of image data and the second instance of image data comprises determining, as an average distance, an average of the distance between, for each first instance of image data: the location of the part of the first instance of image data; and the location of the part of the second instance of image data.

The average distance provides a mechanism for detecting stray or erroneous movement of the predicted location of identified part in the second instance of image data. In particular, this approach provides a mechanism for identifying any sudden or unexpected change of position/location that is more likely to be indicative of an error. This provides a spatiotemporal technique for identifying an error in the detection algorithm.

In some examples, the step of processing the characterizing data of each first instance of image data and the second instance of image data comprises controlling the indicator to indicate that the accuracy of the detection information for the second instance of image data is inaccurate only when the determined average distance exceeds a predetermined distance threshold. The use of a threshold helps prevent the proposed approach from flagging minor variations as inaccuracies, focusing instead on significant deviations that are more likely to represent true detection errors. Thus, a more reliable detection of errors in the detection information of the second instance of image data is achieved.

In some examples, for each first instance of image data and the second instance of image data, the characterizing data comprises, if identified, the content of the part of the instance of image data.

In such examples, the step of processing the characterizing data of each first instance of image data and the second instance of image data may comprise generating, for each first instance of image data, at least one indicator of similarity between the content of the part in the first instance of image data and the content of the part in the second instance of image data. The proposed technique therefore compares the content of different parts of the instances of image data that are defined by the detection information. This approach recognizes that, in a sequence of images, a part defined by the detection information should have similar content across the different instances of image data. By assessing similarity of detected parts of different images, an accurate assessment as to whether the detected part of the second instance of image data is accurate can be achieved. This approach thereby provides improved analysis by considering content-based similarities, e.g., improving detection in complex or dynamic scenes where location-based comparisons may be insufficient.

In some examples, for each first instance of image data: the at least one indicator of similarity comprises a first indicator of similarity; and generating, for said first instance of image data, the at least one indicator of similarity comprises processing the part of the first instance of image data and the part of the second instance of image data using a template matching model to generate the first indicator of similarity. Template matching models provide a robust and efficient method for comparing parts of different images, allowing for accurate detection of similarities even in the presence of minor variations or noise.

In some examples, for each first instance of image data, the first indicator of similarity is a first measure of similarity; and the step of processing the characterizing data of each first instance of image data and the second instance of image data comprises, when the one or more first instances of image data comprises a plurality of instances of image data, averaging the first measures of similarity.

In some examples, for each first instance of image data: the at least one indicator of similarity comprises a second indicator of similarity; and generating, for said first instance of image data, the at least one indicator of similarity comprises processing the part of the first instance of image data and the part of the second instance of image data using a Siamese network model to produce the second indicator of similarity. Siamese network models provide more robust feature extraction and comparison between parts of different images, which are capable of capturing more complex and abstract similarities that may be missed by simpler method.

In some examples, for each first instance of image data, the second indicator of similarity is a second measure of similarity; and the step of processing the characterizing data of each first instance of image data and the second instance of image data comprises, when the one or more first instances of image data comprises a plurality of instances of image data, averaging the second measures of similarity.

In some examples, each indicator of similarity is a measure of similarity; and the step of processing the characterizing data of each first instance of image data and the second instance of image data comprises controlling the indicator to indicate that the accuracy of the identification is inaccurate only when each measure of similarity breaches a respective threshold measure.

In some examples, for each first instance of image data and the second instance of image data, the detection information identifies, the part of the instance of image data predicted to contain a representation of at least one predetermined object of the imaged region; the computer-implemented method further comprises, responsive to the indicator indicating that the accuracy of the detection information for the second instance of image data falls below a predetermined accuracy level: processing the second instance of image data and the content of the part in each of a set of one or more first instances of image data to identify, for each of the set of one or more first instances of image data, a recommended part of the second instance of image data having content that matches or is most similar to the content of the part identified by the detection information of each of the set of one or more first instances of image data; and modifying the identified part for the second instance of image data to align with the recommended part in the second instance of image data.

This approach provides a technique for automated correction of a predicted error in the detection information for the second instance of image data.

In some examples, the set of one or more first instances of image data comprises a first instance of image data that is temporally closest to the second instance of image data in the temporal sequence of instances of image data.

In some examples, the step of processing the second instance of image data and the content of the part in each of a set of one or more first instances of image data comprises: using a template matching algorithm to identify, for each of the set of one or more first instances of image data, a recommended part of the second instance of image data having content that matches or is most similar to the content of the part identified by the detection information of the first instance of image data.

In some examples, the method further comprises, responsive to the indicator indicating that the accuracy of the detection information for the second instance of image data falls below a predetermined accuracy level: correcting the detection information for the second instance of image data using the detection information of at least one of the first instances of image data; and updating the detection algorithm using at least the corrected detection information for the second instance of image data.

In some examples, each instance of image data is an instance of image data captured by a baby monitoring camera. A baby monitoring camera is configured to capture an image that is expected to contain a view of a baby/infant and/or an environment in which a baby/infant is expected (e.g., a baby's bedroom etc.).

The detection algorithm may, for instance, be designed or configured for identifying a part of an instance of image data representing a keypoint or portion of a child (e.g., a baby or infant), such as a location of a child's eye(s), nose, mouth or other keypoint and/or an area representing a child's face, body, torso or other portion of the child.

The proposed approach is particularly advantageous when used to process image data produced by a baby monitoring camera, as the movement of a child within a typical field of view of the baby monitoring camera will be predictable and is not expected to change significantly over time, meaning that there is a close temporal relationship between adjacent instances of image data in the sequence of instances of image data.

There is also provided a computer program product comprising computer program code means which, when executed on a computing device having a processing system, cause the processing system to perform all of the steps of any herein disclosed (computer-implemented) method.

There is also provided a processing system for processing a temporal sequence of instances of image data, wherein the temporal sequence of instances of image data comprises one or more first instances of image data and a second instance of image data, wherein the second instance of image data is later in the sequence than each first instance of image data.

The processing system is configured to, for each first instance of image data and the second instance of image data: use a detection algorithm to process the instance of image data and produce detection information that identifies, if present, a part of the instance of image data predicted to represent at least one selected from the group of: at least one predetermined keypoint in the imaged region; and at least one predetermined object in the imaged region; and process the detection information to produce characterizing data that characterizes one or more properties of, if identified, the part of the instance of image data.

The processing system is also configured to process the characterizing data of each first instance of image data and the second instance of image data to generate an indicator that indicates an accuracy of the detection information for the second instance of image data.

The skilled person would be readily capable of adapting the processing system to perform the function of any herein proposed method, and vice versa.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

    Fig. 1 illustrates a system in which embodiments may be employed;

Fig. 2 is a flowchart illustrating a proposed method;
Fig. 3 is a flowchart illustrating another proposed method;
Fig. 4 illustrates optional further steps; and
Fig. 5 illustrates optional further steps.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Ordinal numbers (e.g. "first", "second" and so on) have been used purely to distinguish different elements from one another for the sake of clarity, and reference to a non-"first" (e.g. "second" or "third") element does not necessitate that a "first" element be present. The skilled person would be capable of relabeling any such elements as appropriate (e.g. relabeling a "second" element as a "first" element if only the second element is present).

As used herein, the term "and/or" includes any and all combinations of one or more of the associated listed items. As used in this disclosure, a list of items joined by the term "at least one selected from the group of' may mean any combination of the listed terms. For example, the phrase "at least one selected from the group of A and B" may mean A; B; or A and B. Similarly, the phrase "at least one selected from the group of A, B and C" may mean A; B; C; A and B; A and C; B and C; or A, B and C.

The invention provides a mechanism for predicting errors in detection information produced by a detection algorithm processing an instance of image data. Detection information from one or more first instances of image data and a second instance of image data is processed to produce characterizing data for each instance of image data. The first and second instances of image data form a portion of a sequence of instances of image data. The characterizing data is processed to generate an indicator of predicted accuracy of the detection information in the second instance of image data.

In the context of the present disclosure, an instance of image data is a computer-readable or digital representation of an imaged region. An alternative label for an instance of image data is a digital image, which is a digital representation of the imaged region. The instance of image data may, for instance, comprise a dataset of data element (i.e., pixels or voxels), each containing information about a different sub-region of the imaged region, e.g., a color, intensity and so on. The instance of image data may be defined as in a raster or vector format, e.g., as a raster image or a vector image. An instance of image data is muti-dimensional, e.g., two-dimensional or three-dimensional, although image data having larger dimensions are also known in the art.

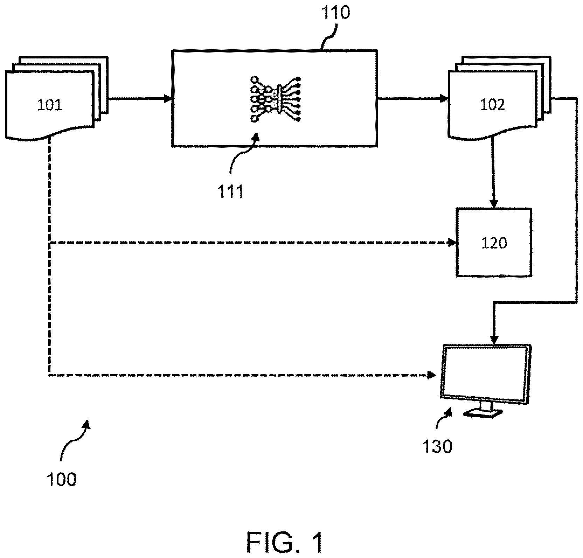

Fig. 1 illustrates a system 100 in which embodiments may be employed. The system illustrates a pipeline for performing object and/or keypoint detection in instances of image data 101. Each instance of image data may, for instance, represent a frame of video data captured by a camera 190 (i.e., be a digital image). As previously explained, each instance of image data represents an imaged region.

The system 100 comprises a processing system 110 configured to use a detection algorithm 111 to process each instance of image data 101 to produce detection information 102 for each instance of image data. The detection information identifies, if present, a part of the instance of image data predicted to represent at least one selected from the group of: at least one predetermined keypoint in the imaged region; and at least one predetermined object in the imaged region. Thus, the part of instance of image data may comprise a pixel/voxel of the image data and/or a group of pixel/voxels of the image data, each predicted to contain a representation of at least one keypoint/landmark and/or predetermined object.

The processing system 110 of the system 100 thereby uses a detection algorithm to process the instance of image data and produce detection information that identifies, if present, a part of the instance of image data predicted to represent at least one selected from the group of: at least one predetermined keypoint in the imaged region; and at least one predetermined object in the imaged region Of course, the detection information may identify more than one part.

The detection information for each instance of image data can be formatted in a number of ways. For instance, the detection algorithm may be configured to identify a location of the part of the instance of image data within the instance of image data. This may be defined within a pre-defined co-ordinate space represented by the instance of image data.

The detection algorithm 111 may be embodied in any suitable form, and a wide variety are known in the art. For example, the detection algorithm may be implemented using machine learning algorithms such as convolutional neural networks (CNNs). Known examples of detection algorithms include single-stage detectors like YOLO (You Only Look Once) or SSD (Single Shot Detector).

A wide variety of example object detection approaches, any of which may be employed for the detection algorithm, are disclosed by Zou, Zhengxia, et al. "Object detection in 20 years: A survey." Proceedings of the IEEE 111.3 (2023): 257-276 and/or Zhao, Zhong-Qiu, et al. "Object detection with deep learning: A review." IEEE transactions on neural networks and learning systems 30.11 (2019): 3212-3232. Other examples for performing keypoint detection, any of which may be employed for the detection algorithm are disclosed by Wang, Nannan, et al. "Facial feature point detection: A comprehensive survey." Neurocomputing 275 (2018): 50-6 Wu, Yue, and Qiang Ji. "Facial landmark detection: A literature survey." International Journal of Computer Vision 127.2 (2019): 115-142.

The detection information of each instance of image data (and optionally each instance of image data) may undergo further processing and/or analysis, e.g., in an analysis block 120 of the system 100. By way of example, for baby monitoring, detected facial features and/or body positions (examples of predetermined keypoints/objects that may be identified) could be analyzed to assess the baby's state or activity level. As another example, for medical imaging, a part of image data could be by automated diagnosis or treatment planning systems.

In some examples, at least one instance of image data and its corresponding detection information may be displayed, e.g., to facilitate visualization and analysis of the imaged region. Thus, the system 100 may comprise a display system 130 configured to provide a visual representation of at least one instance of image data and its corresponding detection information.

In some cases, the original instance of image data may be displayed with visual overlays or annotations representing the detection information. For example, a part of the instance of image data predicted to represent a keypoint may be marked with colored dots or crosshairs superimposed on the image. A part of the instance of image data predicted to represent an object of interest may be outlined with bounding boxes or highlighted regions. Other examples will be readily apparent to the skilled person.

It will be appreciated that the detection information may take a null value or a non-null value (of a set of one or more non-null values). A null value indicates a failure to identify the predetermined keypoint/landmark or object in the corresponding instance of image data. A non-null value indicates a successful identification of a predetermined keypoint/landmark or object in the corresponding instance of image data, e.g., an identified part of the instance of image data.

The present disclosure provides a mechanism for identifying (potential) errors in the detection information produced by the detection algorithm 110 when processing a temporal sequence of instances of image data. Embodiments are based on the recognition that, in a temporal sequence of instances of image data, the presence and/or position of any identified part of each instance of image data will have a temporal dependency. By comparing characterizing data of the identified part for later instances of image data in the sequence to earlier instances of image data in the sequence, then an indicator of accuracy can be generated.

A temporal sequence is a time-ordered sequence of elements, each of which may be associated with a respective timestamp or similar.

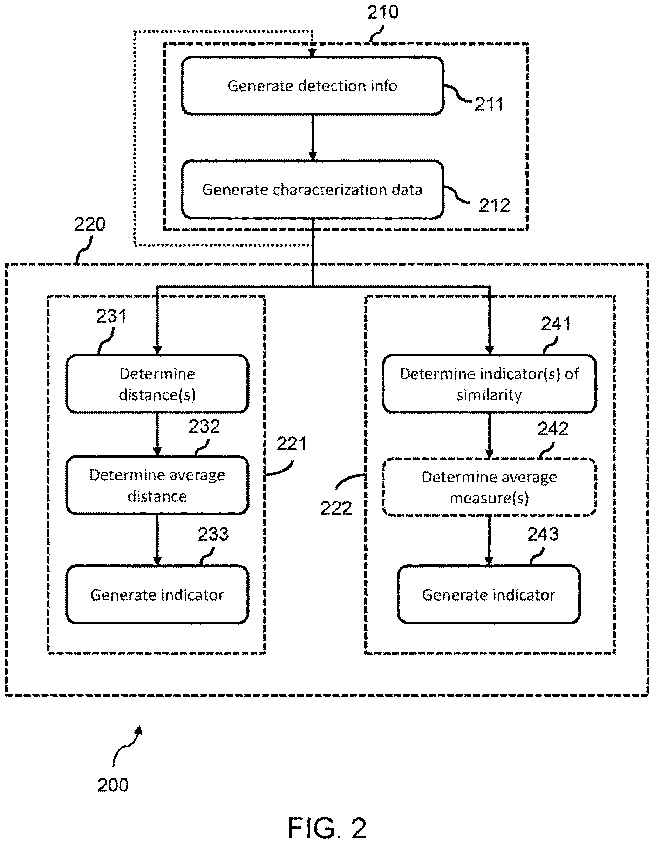

Fig. 2 is a flowchart illustrating a method 200 for processing a temporal sequence of instances of image data. The method 200 may be performed by the processing system 110 (Fig. 1). As such, the method 200 is a computer-implemented method.

The temporal sequence of instances of image data comprises one or more first instances of image data and a second instance of image data. The second instance of image data is later in the temporal sequence that each first instance of image data. In other words, the second instance of image data represents a later point/period of time that each first instance of image data. In this way, the temporal sequence of instances of image data may be formed from a video, with each instance of image data being a different frame of the video.

The one or more first instances of image data may comprise the most immediately preceding instance of image data(s) to the second instance of image data in the sequence of instances of image data. This provides more appropriate and accurate identification or prediction of any errors in the detection information for the second instance of image data.

Although not illustrated, the method 200 may comprise a step of obtaining the temporal sequence of instances of image data. This may, for instance, comprise receiving or retrieving the sequence of instances of image data from a camera system and/or a memory/database. In other examples, this may comprise controlling the camera system to capture the temporal sequence of instances of image data.

For the avoidance of doubt, it is noted that the temporal sequence of instances of image data does not need to comprise all available instances of image data. For instance, the temporal sequence of instances of image data may comprise only a sub-sequence of a larger temporal sequence of instances of image data, e.g., representing a most recent period of time (e.g., a last five minutes or a last ten minutes).

The method 200 comprises performing an image processing procedure 210. The image processing procedure is performed on each first instance of image data and second instance of image data, and may be performed in parallel or consecutively. This is conceptually illustrated using a dotted line.

The image processing procedure 210 comprises a step 211 of using a detection algorithm to process the instance of image data and produce detection information. The detection information identifies, if present: a part of the instance of image data predicted to represent at least one selected from the group of: at least one predetermined keypoint in the imaged region; and at least one predetermined object in the imaged region.

Where the part of the instance of image data represents a predetermined object, the part of the instance of image data may simply be said the entire part representing the predetermined object in the instance of image data. Where the part of the instance of image data represents a keypoint, the part may be a part of a predetermined size of the instance of image data that is centered at the location of the identified representation of the keypoint or a part containing or representing only the representation of the keypoint.

Examples of suitable detection algorithms have been previously described, and are therefore not repeated for the sake of conciseness. Other examples will be apparent to the skilled person.

In some variants of method 200, the step 211 may be omitted. In particular, step 211 may be omitted by receiving the detection information for each instance of image data, e.g., from a database or memory. In other words, the detection information for each instance of image data may be preprocessed information.

The image processing procedure 210 also comprises a step 212 of processing the detection information to produce characterizing data that characterizes, if identified, one or more properties of the part of the instance of image data.

Thus, step 212 functions to produce or output characterizing data for each instance of image data. The characterizing data characterizes one or more properties of the identified part of the instance of image data. Suitable examples will be provided later in this disclosure for improved contextual understanding.

The method 200 also comprises a step 220 processing the characterizing data of each first instance of image data and the second instance of image data to generate an indicator that indicates an accuracy of detection information for the second instance of image data. In this way, an indicator of accuracy is produced that is responsive to the characterizing data of the first instance of image data(s) and the second instance of image data.

By generating this indicator of accuracy, the method 200 provides a mechanism for self-validation of the detection algorithm's output, thereby improving the reliability and robustness of the overall system for keypoint and object detection of instances of image data in temporal sequences of instances of image data (e.g., frames of video data).

The indicator that indicates the accuracy of detection information for the second instance of image data can be formatted in various ways to provide different levels of detail and representation. By way of non-exhaustive example, these formats include binary indicators (such as true/false or accurate/inaccurate), numeric indicator or score (e.g., a confidence score or measure), and/or categorical indicator (e.g., providing labels such as high/medium/low accuracy). The choice of format may depend on the specific requirements of the system and the level of detail needed in the accuracy indication. These different formats can be used individually or in combination to provide a comprehensive representation of the detection accuracy.

Fig. 2 illustrates a number of approaches 221, 222 for performing step 220. The skilled person will appreciate that each approach may require different content for the characterization information, which may define the functionality of process 210 (particularly step 212).

A distance-based approach 211 for producing and processing characterizing data is hereafter described.

In this distance-based approach, the characterizing data comprises a location of the identified part of the instance of image data. Thus, step 211 comprises determining, for the instance of image data, a/the location of the identified part of the instance of image data. This can be defined by a predefined co-ordinate space for the instance of image data.

It will be appreciated that the distance-based approach can (only) be performed when the detection information for each first instance of image data and the second instance of image data has a non-null value, i.e., only when the detection information for each instance of image data identifies a part of the instance of image data.

In some examples, the location of a part of an instance of image data may be defined using an image co-ordinate space. An image co-ordinate space facilitates identification of the relative position of each data element of the image data within an image derivable from the image data. The same image co-ordinate space is shared by each instance of image data.

More particularly, each instance the image data may define an image co-ordinate space in which the representation of the imaged region carried by the instance of image data is defined. The image co-ordinate space is fixed for each instance of image data, such that different parts or elements of the instance of image data are fixedly associated with a respective location in the image co-ordinate space.

The location may be specified using a set of absolute coordinates within the image co-ordinate space, such as pixel coordinates for 2D image data or voxel coordinates for 3D image data. For a part predicted to represent a predetermined keypoint, the location may indicate the specific pixel or voxel where the keypoint is believed to be located. For a part predicted to represent a predetermined object, the location may define the location of a center of mass of the part predetermined to represent the predetermined object.

In some examples, the location of a part of an instance of image data may be defined as a relative location of said part, within the image co-ordinate space, with respect to a predetermined location within the image co-ordinate space. The predetermined location may, for instance, represent a location within the image co-ordinate space of an identified part of another instance of image data. For instance, the predetermined location may represent a location of an identified part of one of the first and/or second instance(s) of image data, e.g., a temporally earliest one of the at least first instance of image data. As another example, the predetermined location may represent a location of an identified part of an instance of image data that is immediately and sequentially before the instance of image data in the sequence of instances of image data.

In some examples, the location of a part of an instance of image data may be defined as a location of a sub-region of the imaged region represented by the part of the instance of image data with respect to a field of view of the image data or a predetermined element or object within the field of view of the image data.

In some examples, the location of a part of an instance of image data may be defined as a relative location of the part of the imaged region represented by the part of the instance of image data with respect to a predetermined part of the imaged region. The predetermined part of the imaged region may, for instance, be defined as a part of the imaged region represented by one of the identified parts of the first and/or second instance(s) of image data, e.g., a temporally earliest one of the at least first instance of image data.

In some examples, the location of a part of an instance of image data may be defined as a relative location of the part of the imaged region represented by the part of the instance of image data with respect to a predetermined part of the imaged region. The predetermined part of the imaged region may, for instance, be defined as a part of the imaged region represented by one of the identified parts of the first and/or second instance(s) of image data, e.g., a temporally earliest one of the at least first instance of image data. In this distance-based approach, the step 220 of processing the characterizing data of each first instance of image data and the second instance of image data comprises determining 232 an average distance.

Where each instance of the characterizing data defines a location of a part of the respective instance of image data, the average distance may be the average of the distance between, for each first instance of image data, the location of the part of the first instance of image data; and the location of the part of the second instance of image data.

Thus, in this situation, for each first instance of image data in the sequence, the method determines 231 the (e.g., Euclidean) distance between the location of the part in that instance of image data and the location of the corresponding part in the second (later) instance of image data. These individual distances are then averaged in a sub-step 232 to produce a single metric.

More particularly, the method determines 231 the distance between the location of the part of the first instance of image data (e.g., in the image co-ordinate space); and the location of the part of the second instance of image data (e.g., in the image co-ordinate space). It will be appreciated that, for each first instance of image data and the second instance of image data, the location of the part of the instance of image data is definable using the same image co-ordinate space, as previously explained.

Of course, if there is only a single first instance of image data, then the average distance is simply the distance between the location of the part of the first instance of image data; and the location of the part of the second instance of image data. Otherwise, an average of the distances is taken.

As a specific example, if (xli, yli) represents the coordinates of the part in the i-th first instance of image data, and (x2, y2) represents the coordinates of the part in the second instance of image data, the distance di for each pair would be calculated as:

$$\text{di} = \sqrt{(x2 - x1i)^2 + (y2 - y1i)^2} \qquad (1)$$

The average distance D may then be computed by summing these individual distances di and dividing by the number of first instances of image data N:

$$D = \frac{1}{N} \sum_1^N \text{di} = \frac{1}{N} \sum_1^N \sqrt{(x2 - x1i)^2 + (y2 - y1i)^2} \qquad (2)$$

The average distance D serves as a measure of how much the keypoint or object (represented by the part of the instance of image data) has moved between the earlier instances of image data and the later instance of image data. A smaller average distance suggests more consistent detection across the temporal sequence, while a larger average distance may indicate potential inaccuracies or significant movement of the keypoint or object.

In this distance-based approach, step 220 may comprise generating/controlling 233 the indicator to indicate that the accuracy of the identification is inaccurate only when the determined average distance D exceeds a predetermined distance threshold Dth. This predetermined distance threshold may be defined by a user or human. In other examples, the predetermined distance may be a predetermined percentage (e.g., 1%, 5% or 10%) of a maximum possible distance - which may be defined by the resolution or size of the instance of image data(s). In some examples, the predetermined distance threshold may be defined to represent a maximum expected movement of a keypoint or object between consecutive instances of image data in the temporal sequence of instances of image data. This may depend upon the specific use-case scenario.

Of course, step 220 may comprise generating/controlling 233 the indicator to indicate that the accuracy of the identification is accurate only when the determined average distance D falls below (or is equal to) the predetermined distance threshold Dth.

By way of example only, where the indicator is a binary indicator (e.g., indicating either accurate or inaccurate), then step 233 may comprise generating/controlling the binary indicator to a first binary value indicating "accurate" when the determined average distance D falls below (or is equal to) the predetermined distance threshold and controls the binary indicator to a second binary value indicating "inaccurate" otherwise.

As another example, where the indicator takes the form of a numeric indicator or score, then step 233 may comprise generating/controlling the numeric indicator to take a value equal to a ratio between the determined average distance and the predetermined distance threshold, e.g., capped at 1. As another example, where the indicator takes the form of a numeric indicator or score, to produce a percentage then step 233 may comprise generating/controlling the numeric indicator to take a value equal to 100x multiple of a ratio the determined average distance and the predetermined distance threshold, e.g., capped at 100.

As another example, where the indicator takes the form of a categorical indicator, then the value of the indicator may depend upon in which of a set of different bands (defined by the predetermined distance threshold). For instance, if we label the difference between the determined average distance D and the predetermined distance threshold Dth as Diff, then the label may take the value "High" if $Diff < \alpha.Dth$, "Medium" if $\alpha.Dth < D < \beta.Dth$ and "Low" otherwise, where $\alpha < \beta$. The skilled person would be readily capable of employing other bands and/or labels, as well as appropriately selecting values for $\alpha$ and $\beta$.

In this way, the distance-based approach provides a technique for predicting whether or not a non-null value of the detection information is a false positive or a true positive.

A similarity-based approach 222 for producing and processing characterizing data is hereafter described.

In this similarity-based matching approach, the characterizing data comprises the content of a part of the instance of image data representing a predetermined keypoint and/or object.

In this way, the detection information (for each instance of image data) identifies the part of the instance of image data predicted to contain a representation of at least one selected from the group of: the at least one predetermined keypoint of the imaged region and the at least one predetermined object of the imaged region.

It will be appreciated that the described similarity-based approach can (only) be performed when the detection information for each first instance of image data and the second instance of image data has a non-null value, i.e., only when the detection information for each instance of image data identifies a part of the instance of image data.

In this similarity-based approach 222, the step 220 of processing 241 the characterizing data of each first instance of image data and the second instance of image data may comprise determining at least one indicator of similarity for each first instance of image data. Each indicator of similarity may, for instance, comprise a measure of similarity or a non-numeric indicator of similarity (e.g., a binary indicator of similarity).

The at least one indicator of similarity for each first instance of image data may comprise at least a first indicator of similarity for each first instance of image data. The first indicator of similarity is produced in step 220 by processing, for each first instance of image data, the part of the first instance of image data and the part of the second instance of image data using a template matching model to produce the first indicator of similarity.

By way of example, the first indicator of similarity for each first instance of image data may be a first measure of similarity between, for the first instance of image data, the part of the first instance of image data and the part of the second instance of image data. An alternative label for a measure of similarity is a similarity score.

Each first indicator (e.g., measure) of similarity is generated using a template matching algorithm or model.

Approaches for generating an indicator (e.g., measure) of similarity using a template matching model are well known in the art. Template matching algorithms typically work by sliding a template image data portion over the image data and computing a similarity metric at each position. Common similarity metrics include cross-correlation, sum of squared differences, or normalized cross-correlation. The highest similarity metric may function as the first measure of similarity for the first instance of image data.

Some examples approaches are put forward by Hashemi, Nazanin Sadat, et al. "Template matching advances and applications in image analysis." arXiv preprint arXiv: 1610.07231 (2016).

Further approaches are disclosed, for instance, in Olson, Clark F. "Maximum-likelihood template matching." Proceedings IEEE Conference on Computer Vision and Pattern Recognition. CVPR 2000 (Cat. No. PR00662). Vol. 2. IEEE, 2000 and Hashemi, Nazanin Sadat, et al. "Template matching advances and applications in image analysis." arXiv preprint arXiv: 1610.07231 (2016). Other example approaches are known in the art.

In approaches where a template matching algorithm or model is used in the generation of the indicator(s) of similarity, then the similarity-based approach may be labelled a template-matching approach.

The at least one indicator of similarity for each first instance of image data may comprise at least a second indicator of similarity for each first instance of image data. The second indicator of similarity is produced in step 220 by processing, for each first instance of image data, the part of the first instance of image data and the part of the second instance of image data using a Siamese network model to produce the second indicator of similarity.

By way of example, the second indicator of similarity for each first instance of image data may be a second measure of similarity between, for the first instance of image data, the part of the first instance of image data and the part of the second instance of image data. An alternative label for a measure of similarity is a similarity score.

Each second indicator (e.g., measure) of similarity is generated using a Siamese network model. Approaches for generating an indicator (e.g., measure) of similarity using a Siamese network model are known in the art.

In general, a Siamese network model is a type of neural network architecture designed to learn similarity or dissimilarity between pairs of inputs. The present approach exploits a Siamese network model to compare the content of parts of different instance of image data and determine their similarity.

The Siamese network model typically consists of two identical subnetworks with shared weights. These subnetworks are used to process two parts of different instances of image data independently, generating feature representations for each. The feature representations may then be compared using a distance metric or similarity function to produce a similarity score. Examples of similarity functions include cosine similarity functions or Euclidean distance functions.

In approaches where a Siamese network model algorithm or model is used in the generation of the indicator(s) of similarity, then the similarity-based approach may be labelled a Siamese-network approach.

Some previously described techniques in the second approach produce at least one measure of similarity for each first instance of image data.

In such approaches, step 220 may comprise determining 242 at least one average measure of similarity, e.g., by averaging the determined measures of similarity. Of course, if there is only a single first instance of image data, then the average measure of similarity is simply the measure of similarity between the part of the first instance of image data and the part of the second instance of image data, e.g., as determined using a template matching algorithm or model. Otherwise, an average of the measures is taken.

In some examples, the average measure of similarity functions as the indicator of accuracy for the detection information for the second instance of image data. This provides a numeric indicator of accuracy for the detection information.

Where an average measure of similarity is generated in step 220, then step 220 may comprise controlling 243 the indicator to indicate that the detection information for the second instance of image data is inaccurate only when the determined average measure of similarity does not exceed a predetermined similarity threshold. This can be used to produce a binary indicator of accuracy (e.g., indicating inaccurate when below the similarity threshold and accurate when above the similarity threshold).

Where both a first and second measure of similarity is generated for each first instance of image data, then a respective first and second average measure of similarity may be generated and compared to respective similarity thresholds. In such examples, the indicator may indicate that the detection information for the second instance of image data is inaccurate when any one of the determined average measure(s) of similarity does not exceed its respective predetermined similarity threshold.

In other examples, step 220 comprises controlling the indicator to indicate that the detection information for the second instance of image data is accurate only when each measure of similarity breaches a respective threshold measure. Thus, each measure of similarity may be individually compared to a respective threshold measure (rather than an average measure being taken and compared to a threshold measure).

The skilled person would be readily capable of using one or more measure(s) of similarity to produce a categorical indicator of accuracy. For example, the skilled person may use multiple thresholds to categorize the accuracy into levels such as "High," "Medium," and "Low."

The skilled person will appreciate that the above described approaches can be combined.

For instance, in some examples, both a distance-based approach and a template-matching approach (using an average measure of similarity) may be used. In such examples, the indicator generated in step 220 may indicate that the detection information is accurate (i.e., a true positive) only when the averaged distance is less than the predetermined distance threshold and the averaged measure of similarity breaches the predetermined threshold. Otherwise, the indicator generated in step 220 may indicate that the detection information is inaccurate (i.e., a false positive).

In some examples, a distance-based approach, a template-matching approach and a Siamese-network approach may be used in step 220. In such examples, the indicator generated in step 220 may indicate that the detection information is accurate (i.e., a true positive) only when the averaged distance is less than the predetermined distance threshold, the first averaged measure of similarity breaches a first similarity threshold and the second average measure of similarity breaches a second similarity threshold. Otherwise, the indicator generated in step 220 may indicate that the detection information is inaccurate (i.e., a false positive).

The above-described approaches provide mechanisms usable for determining or predicting whether or not the detection information for the second instance of image data is a false positive or true positive. In other words, the above-described approaches are usable when the detection information has a non-null value.

Put another way, the previously described step 320 is able to generate an indicator that indicates an accuracy of the detection information for the second instance of image data (only) when the detection information takes a non-null value. As such, the indicator is able to indicate whether the detection information provides a true positive or a false positive.

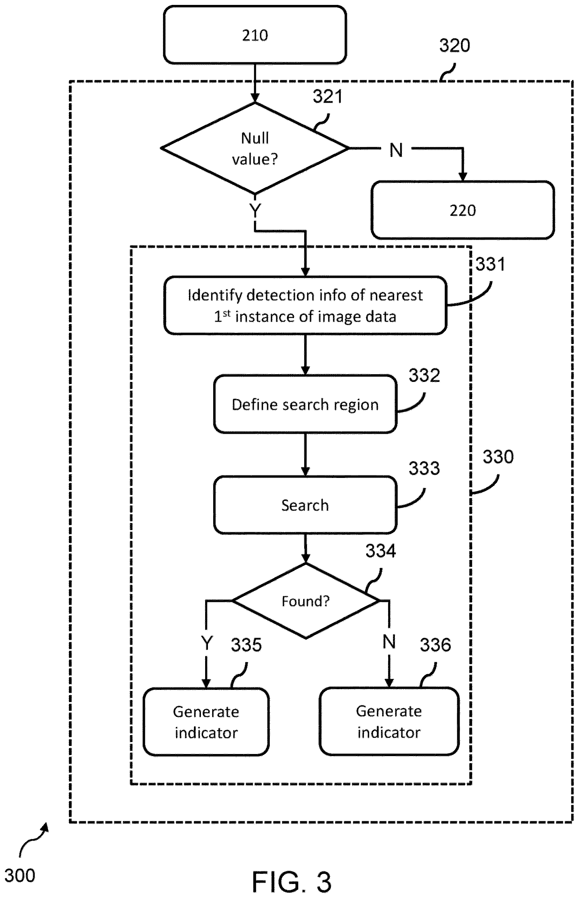

Fig. 3 illustrates another method 300 for processing a temporal sequence of instances of image data. The method 300 may be performed by the processing system 110 (Fig. 1). As such, the method 200 is a computer-implemented method.

Although not illustrated, the method 300 may comprise a step of obtaining the temporal sequence of instances of image data. This may, for instance, comprise receiving or retrieving the sequence of instances of image data from a camera system and/or a memory/database. In other examples, this may comprise controlling the camera system to capture the temporal sequence of instances of image data.

The method 300 comprises performing the image processing procedure 210 previously described. The image processing procedure is performed on each first instance of image data and second instance of image data, and may be performed in parallel or consecutively.

The method 300 also comprises a step 320 of processing the characterizing data of each first instance of image data and the second instance of image data to generate an indicator that indicates an accuracy of the detection information for the second instance of image data.

The method 300 differs from the previously disclosed method in that step 320 is further adapted to generate an indicator that indicates an accuracy of the detection information for the second instance of image data when the detection information takes a null value, i.e., is able to predict whether the detection information provides a false negative or a true negative.

In this approach, the step 320 comprises a sub-step 321 of determining whether or not the detection information for each first instance of image data and the second instance of image data has a null value. This can be trivially performed.

Responsive to a negative determination in sub-step 321, i.e., the detection information(s) do not have a null value, the step 320 performs any previously described step 220 of processing the characterizing data of each first instance of image data and the second instance of image data to generate an indicator that indicates an accuracy of the detection information for the second instance of image data (e.g., employing a distance-based approach, a template-matching approach and/or a Siamese-network approach)

Responsive to a positive determination in sub-step 321, i.e., the decision information(s) have a null value, the step 320 performs a validation process 330.

The validation process 330 comprises a step 331 of identifying detection information for a (temporally) nearest preceding first instance of image data (to the second instance of image data in the sequence of instances of image data) that has a non-null value. The content of the detection information for the nearest preceding first instance of image data is used to define a template part for performing a search. The template part is effectively a region of an instance of image data.

For instance, where detection information identifies a part of the corresponding instance of image data predicted to represent the predetermined object, the template part may simply be the identified part in the detection information for the nearest preceding first instance of image data. Where detection information identifies a part of the corresponding instance of image data predicted to represent a keypoint, the template part may be a part of a predetermined size for the nearest preceding first instance of image data, which part is centered at the location of the identified part in the detection information for the nearest preceding first instance of image data.

The validation process 330 optionally comprises a step 332 of defining a search region or search space. This may be defined as a part of an instance of image data that represents a circular or spherical area of the imaged region around the part of the imaged region represented by a center of mass of the identified template part. This circular or spherical area has a predetermined size and/or radius.

The validation process 330 also comprises a step 333 of searching the second instance of image data for the content of template part. Where step 332 is performed, this search may be limited to only the defined search region/space. Step 333 may comprise determining a similarity metric that indicates a greatest measure of similarity between any part in the searched portion of the second instance of image data and the template part. This can be performed using any known template matching algorithm or the like.

It is again noted that a template matching algorithm effectively identifies which (if any) part of image data matches a template part. Examples of template matching algorithms have been previously described and may be readily adapted for use in performing step 333.

The validation process 330 also comprises determining, in step 334, whether or not a similar part to the template part is identified in step 333 (e.g., whether or not a part of the second instance of image data having a similarity metric greater than a predetermined metric is identified).

Responsive to a positive determination in step 334, i.e., a determination that the searched portion of the second instance of image data contains a similar part to the content of the template part, the method determines as step 335 that the detection information for the second instance of image data is inaccurate, namely a false negative. Thus, step 335 comprises controlling the indicator to indicate that the detection information for the second instance of image data is inaccurate (e.g., a false negative). Responsive to a negative determination in step 334, i.e., a determination that the searched portion of the second instance of image data does not contain a similar region to the content of the template part, the method determines as step 336 that the detection information for the second instance of image data is accurate, namely a true negative. Thus, step 336 comprises generating an indicator that the detection information for the second instance of image data is accurate (e.g., a true negative).

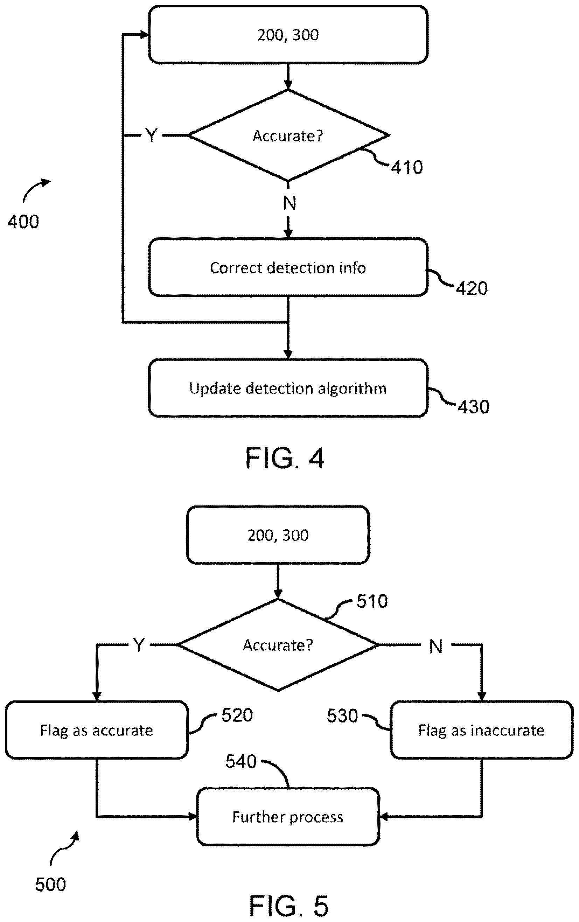

Fig. 4 illustrates a computer-implemented method 400 according to a further embodiment. The method 400 comprises the method 200 or 300 previously described.

The method 400 further comprises a step 410 of determining whether or not indicator indicates that the accuracy of the detection information for the second instance of image data falls below a predetermined accuracy level.

Where the indicator is a binary indicator, this determination may be straightforward. If the binary indicator takes a binary value indicating "inaccurate" (e.g., 0 or false), it may be considered to fall below the predetermined accuracy level. Conversely, if the binary indicator takes a value indicating "accurate" (e.g., 1 or true), it may be considered to meet or exceed the predetermined accuracy level.

Where the indicator is a numeric indicator, this determination may be performed by comparing the numeric indicator to a predetermined threshold value representing the predetermined accuracy level. If the numeric indicator is below this threshold, it may be considered to fall below the predetermined accuracy level. Conversely, if the numeric indicator exceeds this threshold, the accuracy is considered to not fall below the predetermined accuracy level.

Where the indicator is a categorical indicator, this determination may be performed by mapping the categorical indicator to a predetermined definition of whether or not the accuracy is considered to fall below the predetermined level. For instance, if the indicator uses categories such as "High," "Medium," and "Low," a predetermined mapping may define that "Low" falls below the predetermined accuracy level, while "Medium" and "High" meet or exceed it. Alternatively, if more granular categories are used, a threshold category may be defined (e.g., "Moderately Low"), below which the accuracy is considered to fall below the predetermined level.

Responsive to a negative determination (i.e., the indicator indicates that the detection information for the second instance of image data is accurate), the method 400 may revert back to method 200, 300 (e.g., for a subsequent second instance of image data).

Responsive to a positive determination (i.e., the indicator indicates that the detection information for the second instance of image data is inaccurate), the method 400 performs a step 420 of correcting the detection information for the second instance of image data. Step 420 is performed using the detection information of at least one of the first instances of image data, e.g., by way of extrapolation and/or content matching, examples of which are later described.

It will be appreciated that the detection information each first instance of image data and the second instance of image data identifies, if present, a part of the instance of image data predicted to represent at least one selected from the group of: at least one predetermined keypoint in the imaged region; and at least one predetermined object in the imaged region.

In examples where the detection information for each instance of image data identifies a location of a part of the instance of image data, step 420 may comprise the following process.

The location of each identified part in a first set of one or more first instances of image data is identified from the relevant detection information. The first set of first instances of image data may include at least (e.g., only) a temporally closest first instance of image data to the second instance of image data. The location of the identified part in the detection information of the second instance of image data may be corrected responsive to the location of each identified part in the first set of one or more first instances of image data.

For instance, the location of the identified part in the detection information of the second instance of image data may be set to be an average location of the identified part(s) in the first set of one or more first instances of image data.

As another example, the location of the identified part in the detection information of the second instance of image data may be determined using extrapolation from the location of the identified parts in the first set of one or more first instances of image data. For instance, step 420 may employ time series forecasting techniques such as ARIMA (AutoRegressive Integrated Moving Average) or similar algorithms to predict the correct location for the identified part in the detection information of the second instance of image data.

In some cases, the correction process may involve a weighted average approach, where more recent first instances of image data in the set are given higher weight in determining the corrected location for the second instance of image data. This may be particularly useful when the movement or change in the identified part's location is non-linear or accelerating over time.

Other approaches will be appreciated by the skilled person.

In some scenarios, the detection information for each instance of image data identifies content of a part of the instance of image data.

In such scenarios, step 420 may comprise processing the second instance of image data and the content of the part in each of a set of one or more first instances of image data to identify, for each of the set of one or more first instances of image data, a recommended part in the second instance of image data having content that matches or is most similar to the content of the part identified by the detection information of each of the set of one or more first instances of image data. This is known as a content-matching approach.

This may be performed using, for instance, a search process that searches the second instance of image data for the content of the part. This may, for instance, be performed using a template matching algorithm or a Siamese network model, examples of which have been previously described and may be readily adapted for use in performing step 420. More particularly, each algorithm/model may be used to produce a measure of similarity between the content of a plurality of different potential parts of the second instance of image data and the content of the part (e.g., by effectively sliding the content of the part over the searched portion of the second instance of image data). The potential part whose content has a greatest measure of similarity to the content of the/each part may be identified as the recommended part.

In some examples, this search process is performed only within a restricted or constrained portion of the second instance of image data. The location (and optionally size) of the restricted portion may be defined by the location of the part in each of the set of first instances of image data. For instance, the restricted portion may be a part of an instance of image data that represents a circular or spherical area of the imaged region around the part of the imaged region represented by the location of the part. This circular or spherical area has a predetermined size and/or radius.

In some examples, the method 400 further comprises a step 450 of updating the detection algorithm using at least the corrected detection information of the second instance of image data. This step 450 may, for instance, be performed after a predetermined number of iterations of steps 200/300, 410 and 420 have been performed (e.g., to achieve a minimum number of updated instances of corrected detection information for different instances of second instance of image data).

In some examples, step 450 may comprise fine-tuning the detection algorithm using the instance(s) of corrected detection information (and the corresponding instance(s) of the second instance of image data) as additional training data. More specifically, the corrected information and second instance of image data(s) may be used to update parameters of the detection algorithm, improving its accuracy for future detections. Approaches for updating or retaining a detection algorithm using training data are well known in the art, e.g., in the form of supervised learning techniques, gradient descent optimization and so on, and are not disclosed for the sake of conciseness.

In this way, step 450 effectively incorporates a feedback loop into the detection algorithm that takes into account the corrections made to its outputs. This feedback mechanism functions to allow the detection algorithm to learn from its mistakes and adjust its detection strategies accordingly.

Fig. 5 illustrates a computer-implemented method 500 according to a further embodiment. The method 500 comprises the method 200 or 300 previously described.

The method 500 comprises a step 510 determining whether or not the indicator indicates that the accuracy of the detection information for the second instance of image data falls below a predetermined accuracy level. Approaches for performing this step have been described in the context of step 410.

Responsive to a positive determination (i.e., the accuracy is determined to fall below the predetermined accuracy level), then method performs a step 520 of flagging or marking the detection information for the second instance of image data as inaccurate. In some approaches, the flagging or marking may involve setting a binary flag associated with the detection information for the second instance of image data. In other cases, the flagging or marking may involve adding metadata to the detection information. In some examples, the method may also maintain a separate log or database of flagged detection information, for referencing later.

This is useful for subsequent processing or analysis of the detection information. In particular, the flagged or marked detection information may be treated differently in subsequent processing steps. For example, it may be excluded from certain analyses, subjected to additional verification steps, or processed using alternative algorithms designed to handle potentially inaccurate data.

As another example, if the second instance of image data and its detection information is displayed, then the display may be configured to indicate that the detection information is accurate (e.g., using a particular color or annotation). This can provide an individual with useful information for interpreting the second instance of image data and the detection information, e.g., to place less reliance upon the automatically generated detection information.

As another example, if the detection algorithm takes the form of a reinforcement learning algorithm, then the determined accuracy of the detection information for the second instance of image data may function as a reward for the reinforcement learning algorithm. Approaches for updating or modifying a reinforcement learning algorithm using such a reward system are well known in the art.

Thus, the method 500 may comprise further processing 540 the detection information for the second instance of image data and/or the second instance of image data. Approaches for further processing have been previously described.

The skilled person would be readily capable of developing a processing system for carrying out any herein described method. Thus, each step of the flow chart may represent a different action performed by a processing system, and may be performed by a respective module of the processing system.

Embodiments may therefore make use of a processing system. The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a piece of dedicated hardware (e.g., fixed-function hardware) and/or a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

It will be understood that disclosed methods are preferably computer-implemented methods. A computer-implemented method is a method that is implemented by a computer, e.g., formed from a multi-purpose or programmable processor and/or one or more pieces of dedicated hardware (e.g., fixed-function hardware).

There is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method.

There is also proposed a non-transitory storage medium that stores or carries a computer program or computer code that, when executed by a processing system, causes the processing system to carry out any herein described method.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. The mere fact that certain measures are recited in mutually different dependent claims does not indicate that a combination of these measures cannot be used to advantage.

In the claims, the word "comprising" does not exclude other elements or steps, and the indefinite article "a" or "an" does not exclude a plurality. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

A single processor or other unit may fulfill the functions of several items recited in the claims. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "one or more" is used in the claims or description, it is noted the term "one or more" is intended to be equivalent to the term "at least one", and vice versa, and such terms may be used interchangeably.

Any reference signs in the claims should not be construed as limiting the scope.

**Claims**

1. A computer-implemented method for processing a temporal sequence of instances of image data, wherein the temporal sequence of instances of image data comprises one or more first instances of image data and a second instance of image data, wherein the second instance of image data is later in the sequence than each first instance of image data, the computer-implemented method comprising:

   for each first instance of image data and the second instance of image data:

      using a detection algorithm to process the instance of image data and produce detection information that identifies, if present, a part of the instance of image data predicted to represent at least one selected from the group of: at least one predetermined keypoint in the imaged region and at least one predetermined object in the imaged region; and
processing the detection information to produce characterizing data that characterizes one or more properties of, if identified, the part of the instance of image data; and

processing the characterizing data of each first instance of image data and the second instance of image data to generate an indicator that indicates an accuracy of the detection information for the second instance of image data.

2. The computer-implemented method of claim 1, wherein, for each first instance of image data and the second instance of image data, the characterizing data comprises a location of the part of the instance of image data.

3. The computer-implemented method of claim 2, wherein:
the step of processing the characterizing data of each first instance of image data and the second instance of image data comprises determining, as an average distance, an average of the distance between, for each first instance of image data:

the location of the part of the first instance of image data; and
the location of the part of the second instance of image data .

4. The computer-implemented method of claim 3, wherein the step of processing the characterizing data of each first instance of image data and the second instance of image data comprises controlling the indicator to indicate that the accuracy of the detection information for the second instance of image data is inaccurate only when the determined average distance exceeds a predetermined distance threshold.

5. The computer-implemented method of any one of claims 1 to 4, wherein:

for each first instance of image data and the second instance of image data, the characterizing data comprises, if identified, the content of the part of the instance of image data; and
the step of processing the characterizing data of each first instance of image data and the second instance of image data comprises generating, for each first instance of image data, at least one indicator of similarity between the content of the part in the first instance of image data and the content of the part in the second instance of image data.

6. The computer-implemented method of claim 5, wherein, for each first instance of image data:

the at least one indicator of similarity comprises a first indicator of similarity; and
generating, for said first instance of image data, the at least one indicator of similarity comprises processing the part of the first instance of image data and the part of the second instance of image data using a template matching model to generate the first indicator of similarity.

7. The computer-implemented method of claim 6, wherein:

for each first instance of image data, the first indicator of similarity is a first measure of similarity; and
the step of processing the characterizing data of each first instance of image data and the second instance of image data comprises, when the one or more first instances of image data comprises a plurality of instances of image data, averaging the first measures of similarity.

8. The computer-implemented method of any one of claims 5 to 7, wherein, for each first instance of image data:

the at least one indicator of similarity comprises a second indicator of similarity; and
generating, for said first instance of image data, the at least one indicator of similarity comprises processing the part of the first instance of image data and the part of the second instance of image data using a Siamese network model to produce the second indicator of similarity.

9. The computer-implemented method of claim 8, wherein:

for each first instance of image data, the second indicator of similarity is a second measure of similarity; and
the step of processing the characterizing data of each first instance of image data and the second instance of image data comprises, when the one or more first instances of image data comprises a plurality of instances of image data, averaging the second measures of similarity.

10. The computer-implemented method of any one of claims 5 to 9, wherein:

each of the at least one indicator of similarity is a measure of similarity; and
the step of processing the characterizing data of each first instance of image data and the second instance of image data comprises controlling the indicator to indicate that the accuracy of the identification is inaccurate only when each measure of similarity breaches a respective threshold measure.

11. The computer-implemented method of any one of claims 1 to 10, wherein:

for each first instance of image data and the second instance of image data, the detection information identifies the part of the instance of image data predicted to contain a representation of at least one predetermined object of the imaged region;
the computer-implemented method further comprises, responsive to the indicator indicating that the accuracy of the detection information for the second instance of image data falls below a predetermined accuracy level:

processing the second instance of image data and the content of the part in each of a set of one or more first instances of image data to identify, for each of the set of one or more first instances of image data, a recommended part of the second instance of image data having content that matches or is most similar to the content of the part identified by the detection information of each of the set of one or more first instances of image data; and
modifying the identified part for the second instance of image data to align with the recommended part in the second instance of image data.

12. The computer-implemented method of claim 11, wherein the step of processing the second instance of image data and the content of the part in each of a set of one or more first instances of image data comprises:
using a template matching algorithm to identify, for each of the set of one or more first instances of image data, a recommended part of the second instance of image data having content that matches or is most similar to the content of the part identified by the detection information of the first instance of image data.

13. The computer-implemented method of any one of claims 1 to 12, further comprising, responsive to the indicator indicating that the accuracy of the detection information for the second instance of image data falls below a predetermined accuracy level:

correcting the detection information for the second instance of image data using the detection information of at least one of the first instances of image data; and
updating the detection algorithm using at least the corrected detection information for the second instance of image data.

14. A computer program product comprising computer program code means which, when executed on a computing device having a processing system, cause the processing system to perform all of the steps of the computer-implemented method according to any one of claims 1 to 13.

15. A processing system for processing a temporal sequence of instances of image data, wherein the temporal sequence of instances of image data comprises one or more first instances of image data and a second instance of image data, wherein the second instance of image data is later in the sequence than each first instance of image data, wherein the processing system is configured to:

for each first instance of image data and the second instance of image data:

use a detection algorithm to process the instance of image data and produce detection information that identifies, if present, a part of the instance of image data predicted to represent at least one selected from the group of: at least one predetermined keypoint in the imaged region and at least one predetermined object in the imaged region; and
process the detection information to produce characterizing data that characterizes one or more properties of, if identified, the part of the instance of image data;

process the characterizing data of each first instance of image data and the second instance of image data to generate an indicator that indicates an accuracy of the detection information for the second instance of image data.

FIG. 1

FIG. 2

210

320

321

Null
value?

N

Y

220

331

Identify detection info of nearest
1st instance of image data

332

Define search region

333

330

Search

334

Found?

Y 335

N 336

Generate
indicator

Generate
indicator

300

# FIG. 3

FIG. 4

FIG. 5

Europäisches
Patentamt
European
Patent Office
Office européen
des brevets

# EUROPEAN SEARCH REPORT

**Application Number**

EP 24 19 7331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/335523 A1 (PIOTTO NICOLA [DE] ET AL) 17 November 2016 (2016-11-17) * paragraphs [0007], [0018], [0076], [0088] * | 1-15 | INV. G06V10/98 G06V20/40 |
| A | CALEB TUNG ET AL: "Why Accuracy Is Not Enough: The Need for Consistency in Object Detection", ARXIV.ORG, CORNELL UNIVERSITY LIBRARY, 201 OLIN LIBRARY CORNELL UNIVERSITY ITHACA, NY 14853, 28 July 2022 (2022-07-28), XP091281721, DOI: 10.1109/MMUL.2022.3175239 * the whole document * | 1-15 | |
| A | JI YUZHU ET AL: "CASNet: A Cross-Attention Siamese Network for Video Salient Object Detection", IEEE TRANSACTIONS ON NEURAL NETWORKS AND LEARNING SYSTEMS, IEEE, USA, vol. 32, no. 6, 21 July 2020 (2020-07-21), pages 2676-2690, XP011857384, ISSN: 2162-237X, DOI: 10.1109/TNNLS.2020.3007534 [retrieved on 2021-06-01] * section III.; figure 1 * | 1-15 | TECHNICAL FIELDS SEARCHED (IPC) G06V |
| A | Zhang Hong ET AL: "On The Stability of Video Detection and Tracking", , 4 April 2017 (2017-04-04), pages 1-9, XP093242877, Retrieved from the Internet: URL:https://arxiv.org/pdf/1611.06467 * the whole document * | 1-15 | |

The present search report has been drawn up for all claims

| Place of search | Date of completion of the search | Examiner |
|---|---|---|
| The Hague | 24 January 2025 | Lepetit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                     

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 7331

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2025

| Patent document cited in search report | Publication date | Patent family member(s) | | Publication date |
|---|---|---|---|---|
| US 2016335523 A1 | 17-11-2016 | CN | 105934757 A | 07-09-2016 |
| | | EP | 3100177 A1 | 07-12-2016 |
| | | US | 2016335523 A1 | 17-11-2016 |
| | | WO | 2015113608 A1 | 06-08-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZOU ; ZHENGXIA et al.** Object detection in 20 years: A survey. *Proceedings of the IEEE*, 2023, vol. 111 (3), 257-276

- **ZHAO ; ZHONG-QIU et al.** Object detection with deep learning: A review. *IEEE transactions on neural networks and learning systems*, 2019, vol. 30 (11), 3212-3232

- **WANG ; NANNAN et al.** Facial feature point detection: A comprehensive survey. *Neurocomputing*, 2018, vol. 275, 50-6

- **WU ; YUE ; QIANG JI**. Facial landmark detection: A literature survey.. *International Journal of Computer Vision*, 2019, vol. 127 (2), 115-142

- **HASHEMI ; NAZANIN SADAT et al.** Template matching advances and applications in image analysis. *arXiv preprint arXiv: 1610.07231*, 2016

- Maximum-likelihood template matching. **OLSON ; CLARK F**. Proceedings IEEE Conference on Computer Vision and Pattern Recognition. CVPR 2000 (Cat. No. PR00662).. IEEE, 2000, vol. 2